# EUROPÄISCHE PATENTSCHRIFT

(11) **EP 3 414 051 B1**
(45) Veröffentlichungstag und Bekanntmachung des Hinweises auf die Patenterteilung: **29.01.2020**
(21) Anmeldenummer: 17703764.5
(22) Anmeldetag: 09.02.2017
(51) Int. Cl.: B24D 3/00, B24D 18/00, B24D 3/18, B24D 3/34, C04B 35/111, C04B 35/63, C04B 35/634, C04B 35/638, C04B 38/06

(54) **VERFAHREN ZUR HERSTELLUNG EINES KERAMISCHEN FORMKÖRPERS**
METHOD FOR PRODUCING A CERAMIC MOULDED BODY
PROCÉDÉ DE FABRICATION D'UN CORPS MOULÉ EN CÉRAMIQUE

(30) Priorität: 09.02.2016 EP 16154892
(43) Veröffentlichungstag der Anmeldung: 19.12.2018
(73) Patentinhaber: Hermes Schleifmittel GmbH, 22547 Hamburg (DE)
(72) Erfinder: CHRISTIANI, Siegbert, 01139 Dresden (DE); WENZEL, Christian, 01127 Dresden (DE)
(74) Vertreter: Glawe, Delfs, Moll
(86) Internationale Anmeldenummer: PCT/EP2017/052828
(87) Internationale Veröffentlichungsnummer: WO 2017/137482

(56) Entgegenhaltungen:
- EP-A1- 2 540 445
- EP-A1- 2 546 212
- EP-A2- 0 122 640
- DE-A1- 2 247 103
- US-A1- 2010 159 805
- Pubchem: "malic acid | C4H6O5 - Boiling Point", , 17. März 2015 (2015-03-17), XP055365311, Gefunden im Internet: URL:https://pubchem.ncbi.nlm.nih.gov/compo und/malic_acid#section=Boiling-Point&fulls creen=true [gefunden am 2017-04-19]

## Beschreibung

Die Erfindung betrifft ein Verfahren zur Herstellung eines keramischen Formkörpers, insbesondere eines porösen Werkzeugs aus gebundenem Schleifmittel.

Werkzeuge aus gebundenem Schleifmittel finden in der Technik umfangreich Verwendung zur Oberflächenbearbeitung. Solche Werkzeuge sind beispielsweise Schleifscheiben, Schleifsegmente, Schleifstäbe oder Honsteine.

Zur Herstellung eines solchen Werkzeugs wird ein Schleifmittel (beispielsweise Korund, Siliciumcarbid, Diamant oder CBN einer gewünschten Körnung) mit einem Bindemittel (insbesondere einem keramischen Bindemittel), ggf. Additiven und temporären Bindemitteln zu einer Mischung verarbeitet. Diese wird zu einem Grünkörper der gewünschten Form gepresst. Der Grünkörper wird anschließend bei geeigneten Temperaturen getrocknet, ggf. von Porenbildnern befreit und schließlich keramisch gebrannt.

Abhängig vom Einsatzzweck soll ein solches Werkzeug eine bestimmte Porosität, meist auch eine bestimmte Porenform, Porengröße und Porengrößenverteilung aufweisen. Es ist daher bekannt, der Mischung einen Porenbildner (meist Naphthalin) zuzusetzen, der im Grünkörper entsprechende Raumanteile einnimmt. Der Porenbildner wird durch Verdampfen, Sublimieren oder auch durch Verbrennen entfernt. Dies kann während der Aufheizphase des Sintervorgangs oder in einem zeitlich vorgelagerten Verfahrensschritt bei niedrigeren Temperaturen erfolgen. Insbesondere Naphthalin kann bereits bei verhältnismäßig niedrigen Temperaturen entfernt werden, nämlich durch Sublimation bei ca. 80°C. Weitere wichtige Vorteile des Naphthalins sind die gute Mischbarkeit mit anderen Rezepturkomponenten sowie die sehr geringe Rückfederung nach dem Pressen, wodurch Risse im Grünkörper vermieden werden. Schließlich wird das Entfernen bei einer relativ niedrigen Temperatur ermöglicht, bei der ohnehin der Schleifkörper getrocknet wird und andere Bestandteile der Schleifscheibenmischung, wie z. B. Bindungskomponenten, noch nicht aktiviert werden.

Nachteilig an Naphthalin als Porenbildner sind dessen toxische und umweltgefährdende Eigenschaften. Durch einen intensiven und typischen Eigengeruch belastet es die Fertigungsstätten sowie über die Abluft auch die nähere Umgebung. Die Aufwendungen für Arbeits- Gesundheits- und Umweltschutz dominieren die entsprechenden Fertigungsschritte im Herstellungsprozess. Weiterhin vermag Naphthalin zusammen mit Luft explosionsfähige Gemische zu bilden. Dementsprechend sind aufwändige und kostenintensive Sicherheitsvorkehrungen erforderlich.

Im Sinne einer Nachhaltigkeit und Ressourceneinsparung wäre es prinzipiell möglich, Naphthalin durch Resublimation aufzubereiten und erneut zu verwenden. Dieses Verfahren ist jedoch unwirtschaftlich, so dass es üblicherweise einer Nachverbrennung zugeführt wird.

Aufgrund der gravierenden Nachteile des Naphthalins wurden zahlreiche Versuche unternommen, dieses durch alternative Porenbildner zu ersetzen. Zum Einsatz kamen dabei beispielsweise Granulate von Nussschalen oder von Kunststoffen, Dextrin, Zellulose, Kohle (Petrolkoks oder Aktivkohle), Kakaopulver oder auch Wachse. Abgesehen vom Para-Dichlorbenzol, welches ähnliche - positive wie negative - Eigenschaften wie Naphthalin aufweist, weisen diese Alternativen, bezogen auf die unterschiedlichen Fertigungsschritte, erhebliche, zum Teil mehrere der nachfolgend aufgeführten Nachteile auf:
- Stoffe bewirken eine Rückfederung nach der Formgebung. Die Grünlinge zeigen unmittelbar nach dem Ausstoßen aus dem Formwerkzeug oder nach kurzer Zeit Risse
- Poröse Porenbildner, z.B. Aktivkohle, entziehen der Masse Feuchtigkeit, so dass sich selbst bei einer kurzen Lagerzeit der Mischungen deren Beschaffenheit verändert
- Stoffe enthalten Eisenverbindungen, die anorganische Rückstände als rotbraune, harte Flecken im gebrannten Schleifkörper hinterlassen
- Schmelzfähige Stoffe können zwar durch Verdampfung der flüssigen Phase (also nicht durch Sublimation) entfernt werden, jedoch sind hierzu deutlich höhere Temperaturen als 80°C erforderlich. Ähnlich wie beim Naphthalin können sich dadurch explosionsfähige Gemische bilden
- Die Möglichkeit des Verdampfens von Stoffen im Brennofen erfordert meist eine verlängerte Haltezeit, welche die Produktivität der Brennanlage deutlich senken kann. Weiterhin können sich bei diesem Verfahren explosionsfähige Gemische bilden sowie Mischungskomponenten vorzeitig aktiviert werden.
- Das Verbrennen oder Zersetzen von Porenbildnern im Brennofen kann zu einer derart intensiven Gasentwicklung führen, dass der noch nicht ausreichend feste Grünling während des Brandes gesprengt wird.
- Das Verbrennen von Porenbildnern bewirkt eine zusätzliche Wärmeentwicklung, welche eine lokale Abweichung von der Soll-Temperatur verursachen kann.
- Insbesondere bei voluminösen Schleifkörpern kann lokal ein Mangel an Sauerstoff bestehen mit dem Ergebnis einer unvollständigen Verbrennung. Dadurch verbleiben im Schleifkörper schwarze, kohlenstoffhaltige Reste, welche u. a. die Reinheit, Homogenität der Härte und die Schleifleistungen des Schleifkörpers beeinträchtigen.
- Unabhängig von den Bedingungen des Trocknens und Brennens kann die Verwendung von unterschiedlichen Porenbildnern zu veränderten Eigenschaften des Endproduktes führen. So wiesen mit Naphthalin-Ersatzstoffen hergestellte Schleifkörper zum Teil mangelhafte Schleifleistungen und herabgesetzte mechanische Festigkeiten auf.
- Stoffe lassen sich nicht homogen mit der restlichen Schleifkörpermasse vermischen.

In EP 2 251 143 A1 wird ein Verfahren offenbart, das Wachs als Porenbildner einsetzt und dieses nach Verflüssigung vor dem Brennprozess mittels eines Absorptionsmittels entzieht. Damit werden viele der oben genannten Nachteile überwunden, jedoch ist keine vollständige Entfernung des Wachses aus dem Grünkörper möglich. Entsprechend reagieren die verbleibenden Restmengen während des Brennvorgangs exotherm und können ohne entsprechende Vorkehrungen den Schleifkörper schädigen.

EP 2 540 445 A1 offenbart die Verwendung von Oxalsäure als Porenbildner. Diese zersetzt sich beim Erwärmen des Grünkörpers in gasförmige Zersetzungsprodukte.

EP 2 546 212 A1 offenbart ein Verfahren zur Herstellung von porösen Aluminium-Magnesium-Titanat. Das Verfahren umfasst dabei das Formen eines Grünkörpers, enthaltend eine Al-Quelle, eine Mg-Quelle, eine Ti-Quelle, eine Si-Quelle und einen Porenbildner, Vorsintern des erhaltenen Formkörpers sowie Sintern des vorgesinterten Formkörpers. Als Dispersionsmittel können anorganische Säuren, wie Äpfelsäure, zugegeben werden.

Der Erfindung liegt die Aufgabe zugrunde, ein Verfahren der eingangs genannten Art zu schaffen, das eine einfache und prozesstechnisch gut handhabbare Herstellung eines keramischen Formkörpers ermöglicht und die oben beschriebenen Nachteile vermeidet oder vermindert.

Gegenstand der Erfindung ist ein Verfahren zur Herstellung eines keramischen Formkörpers, mit den Schritten:
a) Herstellen eines Grünkörpers enthaltend Keramikmaterial, Bindemittel und einen organischen Porenbildner;
b) Erwärmen des Grünkörpers auf eine Temperatur bei oder über der Sublimationstemperatur des Porenbildners;
c) Brennen des Grünkörpers zu einem keramischen Formkörper.

Erfindungsgemäß ist vorgesehen, dass der organische Porenbildner ausgewählt ist aus der Gruppe bestehend aus Dicarbonsäuren, deren Sublimationstemperatur wenigstens 80 K unterhalb der Zersetzungstemperatur liegt.

Zunächst seien einige im Rahmen der Erfindung verwendete Begriffe erläutert.

Die Begriffe "keramischer Formkörper", "Werkzeug aus gebundenem Schleifmittel", "Schleifmittel", "Bindemittel" sowie "Grünkörper" werden in der vorliegenden Anmeldung so verwendet, wie sie dem Fachmann aus dem Stand der Technik geläufig sind.

Bei Keramikmaterial handelt es sich um ein anorganisches Material, das als solches im Sinterprozess weitgehend unverändert bleibt. Beispielsweise kann es sich um Schleifkorn handeln.

Der Begriff Bindemittel umfasst sowohl keramisches Bindemittel zur Herstellung der Keramikbindung während des Sinterprozesses als auch temporäres Bindemittel. Temporäre Bindemittel dienen zum einen der Herstellung bzw. Sicherung der Formstabilität im Zuge der Herstellung, Lagerung und Bewegung des Grünkörpers und zum anderen der Sicherung der strukturellen Integrität im Zuge des Aufheizens zum Entfernen des Porenbildners.

Der Kern der Erfindung liegt in der Verwendung des erfindungsgemäß definierten Porenbildners, der ohne Beeinträchtigung der strukturellen Integrität des Grünkörpers die Herstellung einer definierten Porosität erlaubt.

Die erfindungsgemäß eingesetzten Dicarbonsäuren haben eine Sublimationstemperatur, die wenigstens 80 K, vorzugsweise 100 K, weiter vorzugsweise 120 K unterhalb der Zersetzungstemperatur liegt.

Dies bedeutet, dass bei einer Erwärmung des Grünkörpers zur Entfernung des Porenbildners dieser ohne Zersetzung sublimiert. Dies hat eine Reihe von Vorteilen gegenüber dem Stand der Technik, der beispielsweise Oxalsäure verwendet.

Oxalsäure beginnt bei etwa 100 °C zu sublimieren, eine Zersetzung erfolgt ab etwa 150 bis 160 °C. Will man Oxalsäure als Porenbildner praktisch vollständig durch Sublimation ohne Zersetzung entfernen, muss in dem Grünkörper im gesamten Volumen einerseits die Temperatur von etwa 100 °C überschritten werden, andererseits darf sie an keiner Stelle den Bereich von etwa 150 °C überschreiten. Dies bedeutet, dass nur eine sehr langsame Aufheizung stattfinden darf und ein Bereich von etwa 120 bis 130 °C über einen längeren Zeitraum von beispielsweise etwa 24 h gehalten werden muss.

Erfolgt das Aufheizen schneller, kann es aufgrund der geometrischen Gestaltung des Ofens oder des Formkörpers oder aufgrund sonstiger Ungleichmäßigkeiten beim Aufheizvorgang dazu kommen, dass die Zersetzungstemperatur von etwa 150 bis 160 °C bereits lokal überschritten wird und es statt zu einer Sublimation zu einer Zersetzung der Oxalsäure unter Bildung hoher Gasvolumina kommt.

Auch unabhängig von der Geschwindigkeit des Aufheizvorgangs kann es in einem Ofen zu lokalen Temperaturinhomogenitäten kommen, die dazu führen, dass in Teilbereichen des Grünkörpers bereits die Zersetzungstemperatur überschritten wird. Beim Entweichen des im Zuge des Zersetzens erheblichen Volumens kann es zu unerwünschter Rissbildung im Grünkörper kommen.

Bei Sublimation entweichen wesentlich geringere Gasvolumina unter leichter zu kontrollierenden Bedingungen, so dass eine solche Rissbildung vermieden werden kann. Dies ermöglicht die Herstellung eines Grünkörpers mit definierter Porosität ohne Beeinträchtigung der strukturellen Integrität. Die erfindungsgemäß vorgesehene Verwendung eines Porenbildners mit einer Sublimationstemperatur wenigstens 80 K unterhalb der Zersetzungstemperatur stellt sicher, dass auch bei relativ schneller Aufheizung bzw. bei Temperaturinhomogenitäten im Ofen eine unerwünschte Zersetzung unter Bildung hoher Gasvolumina vermieden werden kann. Im Rahmen der Erfindung ist es somit häufig möglich, einen separaten vorgelagerten Schritt zur Entfernung des Porenbildners zu vermeiden und diese Entfernung des Porenbildners im Zuge des Aufheizens in Vorbereitung auf den Sintervorgang vorzunehmen.

Ein durch Sublimation entweichender Porenbildner kann aufgefangen und wiederverwendet werden. Es entstehen keine Zersetzungsprodukte, die toxisch oder aggressiv sein können.

Die Sublimationstemperatur des Porenbildners liegt bevorzugt zwischen 160 und 240°C, vorzugsweise 180 und 220°C. Das Entfernen des gasförmig ohne Zersetzung entweichenden Porenbildners kann daher vor Erreichen der eigentlichen Sintertemperatur des Grünkörpers erfolgen.

Der Porenbildner ist im festen Zustand bevorzugt plastisch verformbar und weist keine oder nur eine geringe Rückfederung auf. Auf diese Art und Weise wird vermieden, dass durch eine Rückfederung nach dem Pressen und damit verbundene Volumenvergrößerung des Porenbildners der Grünkörper beschädigt wird.

In der Regel sollen Poren in dem Werkzeug möglichst homogen verteilt sein. Zu diesem Zweck ist es erforderlich, den Porenbildner gleichfalls homogen mit den übrigen Mischungsbestandteilen des Grünkörpers zu vermischen. Um hier eine unerwünschte Entmischung weitgehend zu vermeiden, ist es bevorzugt, dass die Dichte des Porenbildners ähnlich der Dichte der übrigen Bestandteile des Grünkörpers ist. Bevorzugt kann die Dichte des Porenbildners zwischen 1,3 und 2 g/cm³, vorzugsweise 1,4 und 1,8 g/cm³ liegen.

Erfindungsgemäß ist Fumarsäure als Porenbildner besonders bevorzugt. Fumarsäure hat eine Sublimationstemperatur von etwa 200 °C und zersetzt sich erst oberhalb von 350 °C. Sie kann somit bei der Erwärmung des Grünkörpers sublimieren und unzersetzt unter Bildung verhältnismäßig geringer Gasvolumina entweichen.

Fumarsäure ist lagerstabil und nicht hygroskopisch. Sie lagert daher als Porenbildner kein Hydratwasser an. Dies ist von besonderem Vorteil, da Hydratwasser beim Erwärmen eines Grünkörpers bereits bei Temperaturen ab 50 °C unter Bildung großer Volumina verdampft und zu Rissbildung im Grünkörper führen kann. Die im Stand der Technik beispielsweise verwendete Oxalsäure ist stark hygroskopisch und führt daher bei der Verwendung als Porenbildner regelmäßig dazu, dass große Mengen Hydratwasser mit eingelagert werden.

Fumarsäure ist nicht toxisch und als Lebensmittelzusatzstoff zugelassen. Bei der Verwendung und Verarbeitung müssen daher keine entsprechenden Vorkehrungen getroffen werden. Dies ist ein großer Vorteil gegenüber anderen im Stand der Technik verwendeten sublimierenden Porenbildnern wie beispielsweise Naphthalin.

Die Zündtemperatur von Fumarsäure liegt mehr als 150 K oberhalb der Sublimationstemperatur. Das Erwärmen des Grünkörpers zum Entfernen von Fumarsäure kann daher gefahrlos erfolgen.

Der Anteil des Porenbildners am Gesamtgewicht des Grünkörpers kann erfindungsgemäß bevorzugt zwischen 2 und 60 Gew.-%, weiter vorzugsweise 2 und 50 Gew.-%, weiter vorzugsweise 10 und 50 Gew.-%, weiter vorzugsweise 10 und 30 Gew.-%, weiter vorzugsweise 15 und 20 Gew.-% liegen. Die erfindungsgemäße Verwendung von sublimierenden Porenbildnern macht die Verwendung hoher Anteile eines Porenbildners beispielsweise im Bereich von 50 Gew.-% oder mehr möglich, ohne dass es beim Entweichen des Porenbildners durch hohe Gasvolumina zu einer Schädigung des Grünkörpers kommt. Dementsprechend können Formkörper mit hoher Porosität hergestellt werden.

Um die bei der Sublimation des Porenbildners entweichenden Gasvolumina kontrolliert und ohne Beeinträchtigung des Grünkörpers freizusetzen, kann es bevorzugt sein, das Erwärmen auf oder über die Sublimationstemperatur des Porenbildners mit einer definierten Temperaturführung vorzunehmen. Bevorzugt ist hier eine Aufheizrate von 2 bis 80°C/h, weiter vorzugsweise 20 bis 60°C/h. Ein besonderer Vorteil der Erfindung liegt darin, dass auch verhältnismäßig schnelle Aufheizung möglich ist, ohne dass die strukturelle Integrität des Grünkörpers beeinträchtigt wird.

Erfindungsgemäß kann es vorgesehen sein, dass vor dem Erwärmen auf oder über die Sublimationstemperatur des Porenbildners zusätzlich ein Erwärmen auf eine Temperatur unterhalb der Sublimationstemperatur des Porenbildners, vorzugsweise 40 bis 90°C, weiter vorzugsweise 30 bis 50°C erfolgt und der Grünkörper bei dieser Temperatur für einen Zeitraum gehalten wird, der insbesondere das Verdunsten flüchtiger Bestandteile wie Wasser oder Lösungsmittel erlaubt. Bevorzugt liegt dieser Zeitraum zwischen 4 und 48 h. Bei Verwendung eines nicht hygroskopischen Porenbildners wie Fumarsäure kann diese Erwärmung unterhalb der Sublimationstemperatur kurz ausfallen oder ganz unterbleiben.

Der erfindungsgemäß hergestellte keramische Formkörper kann insbesondere ein Werkzeug aus gebundenem Schleifmittel sein. Ebenso denkbar ist eine Ausbildung als keramischer Formkörper für andere insbesondere gewerbliche oder industrielle Zwecke.

Bevorzugt ist es, dass beim Herstellen des Grünkörpers zusätzlich ein Bindemittel eingesetzt wird.

Dieses Bindemittel ist ein temporäres Bindemittel und dient dazu, bei der Herstellung und Handhabung des Grünkörpers dessen strukturelle Integrität und Formtreue zu bewahren, bis diese durch das eigentliche Sintern zum keramischen Formkörper gesichert ist.

Im Stand der Technik werden als temporäre Bindemittel beispielsweise Dextrin/Wasser-Systeme eingesetzt. Dieses Bindemittelsystem ist gesundheitlich unbedenklich und kann im Verlauf des Brennprozesses gut entfernt (ausgebrannt) werden, jedoch verändert sich die Festigkeit eines damit gebundenen Grünkörpers abhängig von Luftfeuchte/Wassergehalt, so dass die Lagerung eines mit diesem Bindemittelsystem hergestellten Grünkörpers bei nicht definierter Luftfeuchtigkeit beispielsweise zu Defekten (Trockenrissen) führen kann.

Ebenfalls im Stand der Technik ist Wachs als temporäres Bindemittel bekannt. Ein wesentlicher Nachteil von Wachs ist, dass beim Erwärmen/Ausbrennen zündfähige Gemische entstehen können, so dass aufwändige Schutzmaßnahmen zu treffen sind.

Gemäß einem besonders vorteilhaften Aspekt der Erfindung ist daher vorgesehen, dass das Bindemittel Polyglykole, bevorzugt Polyethylenglykole (PEG) umfasst. Vorteilhafte Molekulargewichtsbereiche für die Polyethylenglykole sind 100 bis 20.000, weiter vorzugsweise 200 bis 10.000, weiter vorzugsweise 250 bis 8000. PEG im Molekulargewichtsbereich bis 600 sind typischerweise flüssig. Ein bevorzugter Bereich solcher flüssiger PEG ist 300 bis 600.

Die Erfindung hat erkannt, dass überraschenderweise Polyethylenglykole mit den als Porenbildnern verwendeten Dicarbonsäuren ein vorteilhaftes temporäres Bindemittelsystem bilden.

Ein die Erfindung nicht beschränkender Erklärungsversuch für dieses überraschende vorteilhafte Verhalten ist es, dass die endständigen OH-Gruppen der Polyethylenglykole mit den Carboxylgruppen unter Esterbildung reagieren und so ein temporäres Bindemittelsystem bilden. Die Bindung (Veresterung) von Säure und Polyethylenglykolen erfolgt bevorzugt bei einer Temperatur, die unterhalb der Sublimationstemperatur des verwendeten Porenbildners liegt. Beispielsweise verestert Fumarsäure mit Polyethylenglykolen bei etwa 165 °, dies liegt deutlich unterhalb der Sublimationstemperatur von 180 bis 200 °C. Eine ausreichende Veresterung von Fumarsäure kann erfindungsgemäß auch bei niedrigeren Temperaturen, z.B. etwa 90°C, erreicht werden. Dies erfordert aber, die Temperatur länger zu halten.

Eine solche Veresterung findet insbesondere mit niedermolekularen, flüssigen PEG beispielsweise im Molekulargewichtsbereich 300 bis 600 statt. Das so ab etwa 165 °C gebildete temporäre Bindemittelsystem dient insbesondere der Stabilisierung des Grünkörpers im Zuge des nachfolgenden Entfernens des Porenbildners. Davon zu unterscheiden ist ein noch eine Stufe vorgelagertes temporäres Bindemittelsystem, das bereits im Zuge der Herstellung, Lagerung und Bewegung des Grünkörpers vor dem ersten Aufheizen zur Sicherung der gewünschten Formstabilität und Handhabbarkeit dient. Für diese initialen Bindemittel können im Stand der Technik bekannte temporäre Bindemittelsysteme verwendet werden, die bspw. ebenfalls PEG umfassen. Dabei kommen bevorzugt höhermolekulare, feste PEG wie beispielsweise PEG 6000 zur Anwendung.

Bei einer besonders bevorzugten Ausführungsform der Erfindung kann der Porenbildner somit eine Doppelfunktion ausüben. Im ersten Schritt wird er Bestandteil eines temporären Bindemittels durch Reaktion (Veresterung) mit Polyethylenglykolen. Im zweiten Schritt (bei höherer Temperatur) sublimiert der Rest des Porenbildners und wird so aus dem Grünkörper entfernt. Bei einer noch höheren Temperatur vor dem Sintern wird dann das temporäre Bindemittelsystem ausgebrannt. Die Erfindung hat erkannt, dass dieses Bindemittelsystem rückstandsfrei und ohne Bildung zündfähiger Gasgemische ausgebrannt werden kann. Damit der Porenbildner diese Doppelfunktion ausüben kann, muss er in einem hinreichenden stöchiometrischen Überschuss relativ zu den Polyethylenglykolen zugegeben werden. Der im ersten Schritt nicht mit den Polyethylenglykolen reagierte Anteil verbleibt dann als Porenbildner im Grünkörper.

Im Rahmen der Erfindung kann ein Porenbildner wie insbesondere Fumarsäure in zwei unterschiedlichen Partikelgrößefraktionen eingesetzt werden. Eine Fraktion mit kleinen Korngrößen von beispielsweise 100 µm oder weniger, vorzugsweise 1-100µm, weiter vorzugsweise 1-30µm und weiter vorzugsweise 1-20µm soll nach Möglichkeit im Grünkörper fein verteilt als Reaktant zur Veresterung mit PEG zur Verfügung stehen.

Eine größere, granulierte Fraktion mit einer mittleren Korngröße von beispielsweise 1 mm dient primär zur Porenbildung.

Die Erfindung wird nachfolgend anhand von Ausführungsbeispielen erläutert.

### Beispiel 1:

Aus folgenden Rezepturen wurden 2 gleiche Schleifkörper der Abmessung 300x20x127 hergestellt. Rezeptur 1 ist ein Vergleichsbeispiel, Rezeptur 2 erfindungsgemäß. Als keramisches Bindemittel wird in diesem und allen weiteren Beispielen eine Mischung aus 50 Gew.-% Fritte 90158 (Ferro), 25 Gewichtsprozent Ton und 25 Gew.-% Petalit verwendet.

| | |
|---|---|
| 1. Sinterkorund F100 | 20,8% |
| Edelkorund F100 | 62,5% |
| Keramisches Bindemittel | 16,7% |
| Naphthalin | 13,0% |
| (Pulver ca. 200 µm Korngröße) | |
| Dextrinpulver | 2,0% |
| Wasser | 2,8% |
| | |
| Dichte nach dem Brand: | 1,78 g/cm³ |
| Elastizitäts-Modul: | 29,0 GPa |
| | |
| 2. Sinterkorund F100 | 20,8% |
| Edelkorund F100 | 62,5% |
| Keramisches Bindemittel | 16,7% |
| Fumarsäure | 16,1% |
| (Pulver ca.200µm Korngröße) | |
| PEG 300 | 3,0% |
| PEG 6000 | 1,0% |
| | |
| Dichte nach dem Brand: | 1,77 g/cm³ |
| Elastizitäts-Modul: | 29,0 GPa |

Die Schleifkörpermasse nach Rezeptur 1 mit Naphthalin als Porenbildner wurde gepresst und anschließend bei 80°C in einen Trockenofen mit thermischer Nachverbrennungsanlage getrocknet und das Naphthalin entbindert. Anschließend wurden die Schleifkörper bei einer maximalen Temperatur von 950°C in einem keramischen Brennofen (Energo-Ofen) gebrannt.

Die Schleifkörpermasse nach Rezeptur 2 mit Fumarsäure als Porenbildner wurde gepresst und anschließend in einen Härteofen (Reinhardofen) bei einer maximalen Temperatur von 165°C in 24 h gehärtet/ verestert. Folgende Härtekurve wurde angewendet. 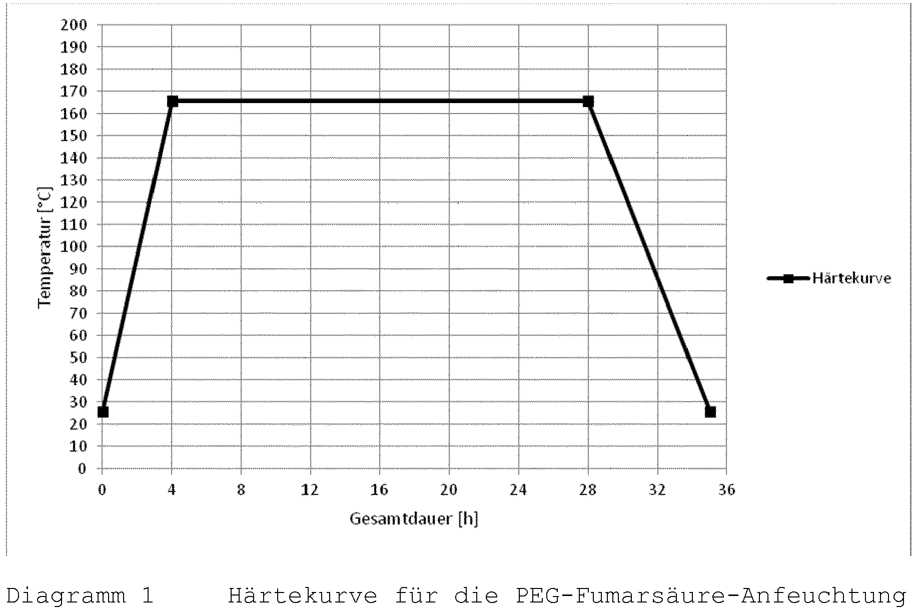 Anschließend wurden die Schleifkörper bei einer maximalen Temperatur von 950°C in einem keramischen Brennofen (Energo-Ofen) gebrannt. In der Aufheizphase betrug die Aufheizgeschwindigkeit ca. 30-50°C/h. In der Aufheizphase wurde die Fumarsäure entbindert.

Die mit dem Porenbildner Fumarsäure und Naphthalin hergestellten Schleifkörper wurden auf einem Schleifversuchsstand (Blohm-Flachschleifmaschine) schleiftechnisch verglichen. Gemessen wurden die Schleifkraft (Diagramm 2), das G-Verhältnis (Diagramm 3) und die Rauheit (Diagramm 4) jeweils in Bezug auf das zerspante Werkstückvolumen.

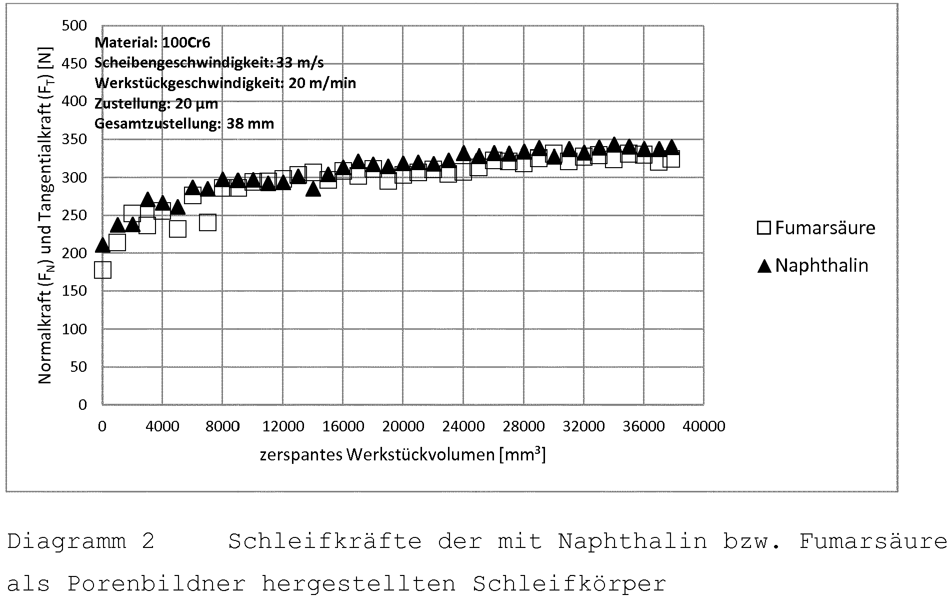

Die von diesen Schleifkörpern verursachten Schleifkräfte sind annähernd gleich groß.

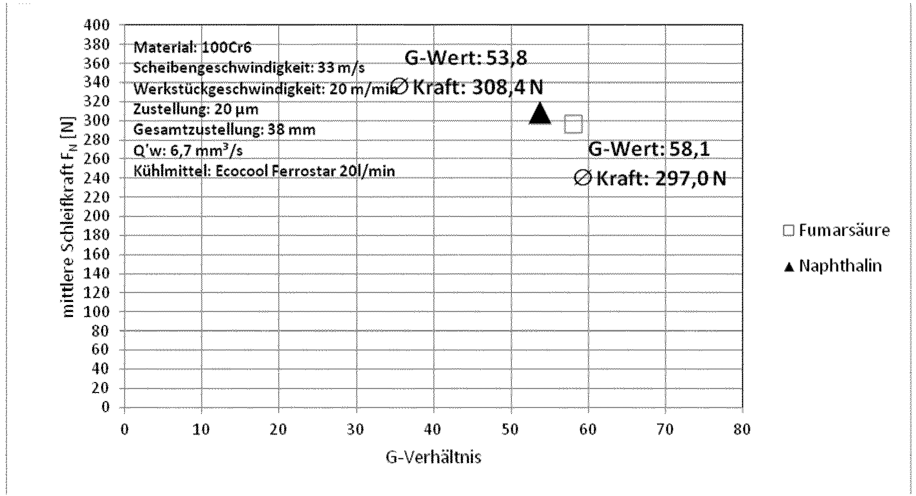

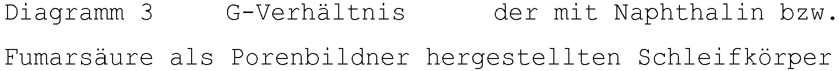

Das G-Verhältnis des mit Fumarsäure hergestellten Schleifkörpers ist etwas größer und die Schleifkraft etwas geringer.

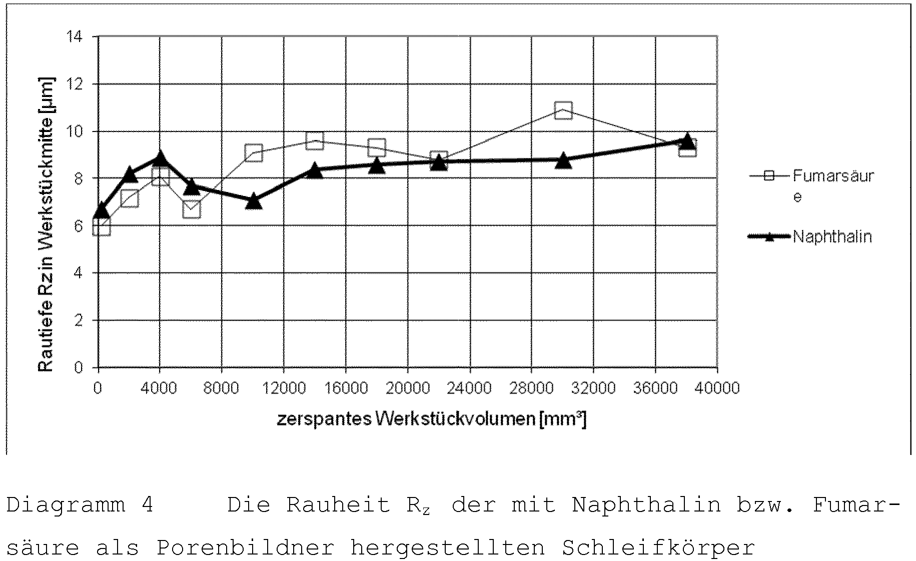

Auch die Rauheit der Schleifkörper ist als etwa gleich groß zu werten.

Insgesamt kann festgestellt werden, dass die Schleifleistung der beiden Schleifkörper als gleichwertig eingeschätzt werden kann.

### Beispiel 2:

Herstellung eines hochporösen Probekörpers (Durchmesser 202, Höhe 100 mm).

### Rezeptur:

| | |
|---|---|
| Edelkorund F80 | 88,6% |
| Keramische Bindung | 11,4% |
| PEG 300 | 4,0% |
| PEG 6000 | 3,0% |
| Fumarsäure | 40,0% |
| (Granulat 500-800µm) | |
| Dichte nach dem Brand: | 1,39 g/cm³ |

Die Rezepturkomponenten wurden homogen vermischt und anschließend gepresst. Danach wurde die Scheibe in einen Trockenofen mit thermischer Nachverbrennungsanlage entbindert. Die Entbinderungskurve beinhaltete das Aufheizen mit 50°C/h bis 200°C, das Halten der Maximaltemperatur von 200°C über 48h und das natürliche Abkühlen des Ofens auf Raumtemperatur. Die Festigkeit war danach völlig ausreichend, um die Scheibe auf dem Ofenwagen für den keramischen Brand aufzubauen. Anschließend wurden die Schleifkörper bei einer maximalen Temperatur von 950°C in einem keramischen Brennofen (Energo-Ofen) gebrannt.

## Patentansprüche

1. Verfahren zur Herstellung eines keramischen Formkörpers, mit den Schritten:
a) Herstellen eines Grünkörpers enthaltend Keramikmaterial, Bindemittel und einen organischen Porenbildner;
b) Erwärmen des Grünkörpers auf eine Temperatur bei oder über der Sublimationstemperatur des Porenbildners;
c) Brennen des Grünkörpers zu einem keramischen Formkörper;
**dadurch gekennzeichnet, dass** der organische Porenbildner ausgewählt ist aus der Gruppe bestehend aus Dicarbonsäuren, deren Sublimationstemperatur wenigstens 80 K unterhalb der Zersetzungstemperatur liegt.

2. Verfahren nach Anspruch 1, **dadurch gekennzeichnet, dass** die Sublimationstemperatur bei 160 bis 240°C, vorzugsweise 180 bis 220°C liegt.

3. Verfahren nach Anspruch 2, **dadurch gekennzeichnet, dass** der Porenbildner Fumarsäure ist.

4. Verfahren nach einem der Ansprüche 1 bis 3, **dadurch gekennzeichnet, dass** der Anteil des Porenbildners am Gesamtgewicht des Grünkörpers in Schritt a) des Anspruchs 1 zwischen 2 und 60 Gew.-%, vorzugsweise 2 und 50 Gew.-%, weiter vorzugsweise 10 und 50 Gew.-%, weiter vorzugsweise 10 und 30 Gew.-%, weiter vorzugsweise 15 und 20 Gew.-% liegt.

5. Verfahren nach einem der Ansprüche 1 bis 4, **dadurch gekennzeichnet, dass** das Erwärmen in Schritt b) des Anspruchs 1 mit einer Aufheizrate von 2 bis 80°C/h, vorzugsweise 20 bis 60°C/h erfolgt.

6. Verfahren nach einem der Ansprüche 1 bis 5, **dadurch gekennzeichnet, dass** vor dem Erwärmen in Schritt b) des Anspruchs 1 zusätzlich ein Erwärmen auf eine Temperatur unterhalb der Sublimationstemperatur des Porenbildners, vorzugsweise 30 bis 50°C, erfolgt und der Grünkörper bei dieser Temperatur vorzugsweise für 4 bis 48 h gehalten wird.

7. Verfahren nach einem der Ansprüche 1 bis 6, **dadurch gekennzeichnet, dass** der keramische Formkörper ein Werkzeug aus gebundenem Schleifmittel ist.

8. Verfahren nach einem der Ansprüche 1 bis 7, **dadurch gekennzeichnet, dass** beim Herstellen des Grünkörpers zusätzlich ein temporäres Bindemittel eingesetzt wird.

9. Verfahren nach Anspruch 8, **dadurch gekennzeichnet, dass** das Bindemittel Polyglykole umfasst.

10. Verfahren nach Anspruch 9, **dadurch gekennzeichnet, dass** die Polyglykole Polyethylenglykole mit einer Molmasse von 100 bis 20.000, weiter vorzugsweise 200 bis 10.000, weiter vorzugsweise 250 bis 8000 sind.

11. Verfahren nach Anspruch 9 oder 10, **dadurch gekennzeichnet, dass** das Bindemittel zusätzlich zur Veresterung fähige Reaktanten für die Polyglykole umfasst.

12. Verfahren nach Anspruch 11, **dadurch gekennzeichnet, dass** der Porenbildner zusätzlich als Reaktant eingesetzt wird.

13. Verfahren nach Anspruch 12, **dadurch gekennzeichnet, dass** der Porenbildner als Feststoff in wenigstens zwei unterschiedlichen Partikelgrößenfraktionen eingesetzt wird.

14. Verfahren nach Anspruch 13, **dadurch gekennzeichnet, dass** die feinere Partikelgrößenfraktion eine Korngröße von 1-100µm, vorzugsweise 1-30µm und weiter vorzugsweise 1-20µm aufweist.

## Claims

1. Method for producing a ceramic molding comprising the steps of:
a) producing a green body comprising ceramic material, binders and an organic pore former;
b) heating the green body to a temperature equal to or above the sublimation temperature of the pore former;
c) firing the green body to form a ceramic molding;
**characterized in that** the organic pore former is selected from the group consisting of dicarboxylic acids of which the sublimation temperature is at least 80K below the decomposition temperature.

2. Method according to Claim 1, **characterized in that** the sublimation temperature is from 160 to 240°C, preferably 180 to 220°C.

3. Method according to Claim 2, **characterized in that** the pore former is fumaric acid.

4. Method according to any of Claims 1 to 3, **characterized in that** the proportion of pore former of the total weight of the green body in step a) of Claim 1 is between 2 and 60% by weight, preferably 2 and 50% by weight, more preferably 10 and 50% by weight, more preferably 10 and 30% by weight, more preferably 15 and 20% by weight.

5. Method according to any of Claims 1 to 4, **characterized in that** the heating in step b) of Claim 1 is conducted at a heating rate of 2 to 80°C/h, preferably 20 to 60°C/h.

6. Method according to any of Claims 1 to 5, **characterized in that**, prior to the heating in step b) of Claim 1, additionally heating to a temperature below the sublimation temperature of the pore former, preferably 30 to 50°C, is carried out and the green body is maintained at this temperature preferably for 4 to 48 h.

7. Method according to any of Claims 1 to 6, **characterized in that** the ceramic molding is a tool composed of bonded abrasive.

8. Method according to any of Claims 1 to 7, **characterized in that** in addition a temporary binder is used during the production of the green body.

9. Method according to Claim 8, **characterized in that** the binder comprises polyglycols.

10. Method according to Claim 9, **characterized in that** the polyglycols are polyethylene glycols having a molar mass from 100 to 20 000, more preferably 200 to 10 000, more preferably 250 to 8000.

11. Method according to Claim 9 or 10, **characterized in that** the binder additionally comprises reactants able to esterify the polyglycols.

12. Method according to Claim 11, **characterized in that** the pore former is additionally used as reactant.

13. Method according to Claim 12, **characterized in that** the pore former is used as a solid in at least two different particle size fractions.

14. Method according to Claim 13, **characterized in that** the finer particle size fraction has a particle size from 1-100 µm, preferably 1-30 µm and more preferably 1-20 µm.

## Revendications

1. Procédé de fabrication d'un corps moulé céramique, comprenant les étapes suivantes :
a) la fabrication d'un corps vert contenant un matériau céramique, un liant et un agent de formation de pores organique ;
b) le chauffage du corps vert à une température supérieure ou égale à la température de sublimation de l'agent de formation de pores ;
c) la combustion du corps vert en un corps moulé céramique ;
**caractérisé en ce que** l'agent de formation de pores organique est choisi dans le groupe constitué par les acides dicarboxyliques dont la température de sublimation est au moins 80 K en dessous de la température de décomposition.

2. Procédé selon la revendication 1, **caractérisé en ce que** la température de sublimation est de 160 à 240 °C, de préférence de 180 à 220 °C.

3. Procédé selon la revendication 2, **caractérisé en ce que** l'agent de formation de pores est l'acide fumarique.

4. Procédé selon l'une quelconque des revendications 1 à 3, **caractérisé en ce que** la proportion de l'agent de formation de pores par rapport au poids total du corps vert à l'étape a) de la revendication 1 est comprise entre 2 et 60 % en poids, de préférence entre 2 et 50 % en poids, de manière davantage préférée entre 10 et 50 % en poids, de manière davantage préférée entre 10 et 30 % en poids, de manière davantage préférée entre 15 et 20 % en poids.

5. Procédé selon l'une quelconque des revendications 1 à 4, **caractérisé en ce que** le chauffage à l'étape b) de la revendication 1 a lieu avec un taux de chauffage de 2 à 80 °C/h, de préférence de 20 à 60 °C/h.

6. Procédé selon l'une quelconque des revendications 1 à 5, **caractérisé en ce qu'**un chauffage à une température inférieure à la température de sublimation de l'agent de formation de pores, de préférence de 30 à 50 °C, a en outre lieu avant le chauffage à l'étape b) de la revendication 1, et le corps vert est de préférence maintenu pendant 4 à 48 h à cette température.

7. Procédé selon l'une quelconque des revendications 1 à 6, **caractérisé en ce que** le corps moulé céramique est un outil constitué par un agent abrasif lié.

8. Procédé selon l'une quelconque des revendications 1 à 7, **caractérisé en ce qu'**un liant temporaire est utilisé en outre lors de la fabrication du corps vert.

9. Procédé selon la revendication 8, **caractérisé en ce que** le liant comprend des polyglycols.

10. Procédé selon la revendication 9, **caractérisé en ce que** les polyglycols sont des polyéthylène glycols ayant une masse molaire de 100 à 20 000, de manière davantage préférée de 200 à 10 000, de manière davantage préférée de 250 à 8 000.

11. Procédé selon la revendication 9 ou 10, **caractérisé en ce que** le liant comprend en outre des réactifs aptes à l'estérification pour les polyglycols.

12. Procédé selon la revendication 11, **caractérisé en ce que** l'agent de formation de pores est en outre utilisé en tant que réactif.

13. Procédé selon la revendication 12, **caractérisé en ce que** l'agent de formation de pores est utilisé sous la forme d'un solide en au moins deux fractions de tailles de particules différentes.

14. Procédé selon la revendication 13, **caractérisé en ce que** la fraction de tailles de particules plus fine présente une taille de grain de 1 à 100 µm, de préférence de 1 à 30 µm et de manière davantage préférée de 1 à 20 µm.
